# EUROPEAN PATENT SPECIFICATION

(11) **EP 1 170 534 B1**
(45) Date of publication and mention of the grant of the patent: **01.02.2006**
(21) Application number: 01202472.5
(22) Date of filing: 27.06.2001
(51) Int. Cl.: F16K 11/20, F16K 31/06, F16K 11/052, F16K 31/04, H01M 8/04, F16K 11/10

(54) **Fuel cell control valves**
Brennstoffzellesteuerventile
Soupape de commande pour piles à combustible

(30) Priority: 27.06.2000 US 214667 P; 28.06.2000 US 214627 P; 28.06.2000 US 214629 P; 28.06.2000 US 214633 P; 30.10.2000 US 244227 P; 26.06.2001 US 888618
(43) Date of publication of application: 09.01.2002
(73) Proprietor: Siemens VDO Automotive Inc., Chatham, Ontario N7M 5M7 (CA)
(72) Inventor: Gagnon, Frederic, Chatham, Ontario (CA)
(74) Representative: Neill, Andrew Peter

(56) References cited:
- FR-A- 1 487 913
- FR-A- 2 043 936
- FR-A- 2 660 396
- GB-A- 2 208 427
- GB-A- 2 289 743
- US-A- 3 415 262
- US-A- 3 680 831
- US-A- 4 718 457
- US-A- 5 117 856
- US-A- 5 531 205
- US-A- 5 927 682
- PATENT ABSTRACTS OF JAPAN vol. 016, no. 314 (M-1278), 9 July 1992 (1992-07-09) & JP 04 088270 A (JIDOUSHIYA BUHIN KOUGIYOU KK), 23 March 1992 (1992-03-23)
- PATENT ABSTRACTS OF JAPAN vol. 1999, no. 12, 29 October 1999 (1999-10-29) & JP 11 201320 A (KITZ CORP), 30 July 1999 (1999-07-30)

## Description

### Background of the Invention

It is believed that a fuel cell consists of two electrodes sandwiched around an electrolyte. It is believed that oxygen, from air, passes over one electrode and hydrogen, from a storage device, passes over the other electrode, that, in a chemical reaction, generates electricity, water and heat. The electricity generated by a fuel cell is believed to be regulated at least in part by the amount of air or oxygen delivered to the fuel cell.

### Summary of the Invention

The present invention provides for an air mass flow controller valve comprising:
an air inlet;
at least two channels coupled to respective air outlets;
respective closure members in each of said channels; each said closure member being movable relative to a respective seating means for selectively permitting or preventing a flow of air from said inlet to said outlets;
respective actuating means for moving each said closure member between first and second positions relative to said seating means whereby said flow of air is respectively permitted and prevented;
the controller valve being characterized by:
   said channels and said closure members, said seating means and said actuating means being relatively disposed and configured such that said air flow from said inlet; to each of said outlets is substantially transverse to the movement of said closure members;
   respective sensor means associated with each of said channels being provided and operable to sense an air mass flowing in each of said channels and to develop respective electrical signals indicative thereof;
   control means for utilizing said electrical signals and target air mass signals for the channels to generate respective feedback error signals and for utilizing said feedback error signals to control the movements of said closure members thereby regulating the air flows in each of said channels.

In particular, the air mass flow controller valve can be used to deliver a desired amount of air or any other gases to fuel cells.

FR 2 043 936-A discloses a dual-outlet fluid valve in which the amounts of fluid exiting the respective outlets are controlled by means of individual, reciprocating closure members co-operating with respective seatings and US 5 117 856-A discloses a valve arrangement for extending a measurement range of gas flow rates, utilizing a flow-rate operated valve to route gas through one or the other of two outlets coupled to respective flowmeters for small and large gas flows.

In a preferred embodiment, the present invention provides a method of distributing metered airflow from an inlet to a plurality of channels in a fuel cell. Each channel of the plurality of channels is provided with an air mass flow sensor and a plurality of closure members. Each closure member is contiguous to a seat portion and is disposed in a respective channel of the plurality of channels. Each closure member is movable by an actuator between a first position to permit flow and a second position to prevent flow. The method includes flowing air to the inlet; determining an air mass amount in each channel of the plurality of channels; and distributing the air mass amount provided to each channel from the inlet as a function of a desired air amount and the air mass amount determined in each channel.

### Brief Description of the Drawings

The accompanying drawings, which are incorporated herein and constitute part of this specification, illustrate an embodiment of the invention, and, together with the general description given above and the detailed description given below, serve to explain the features of the invention.

Figure 1 illustrates a cross-sectional view of an air mass flow controller valve according to a preferred embodiment of the invention.

Figure 2 illustrates an orthogonal view of the air mass flow controller valve of Figure 1.

### Detailed Description of the Preferred Embodiment

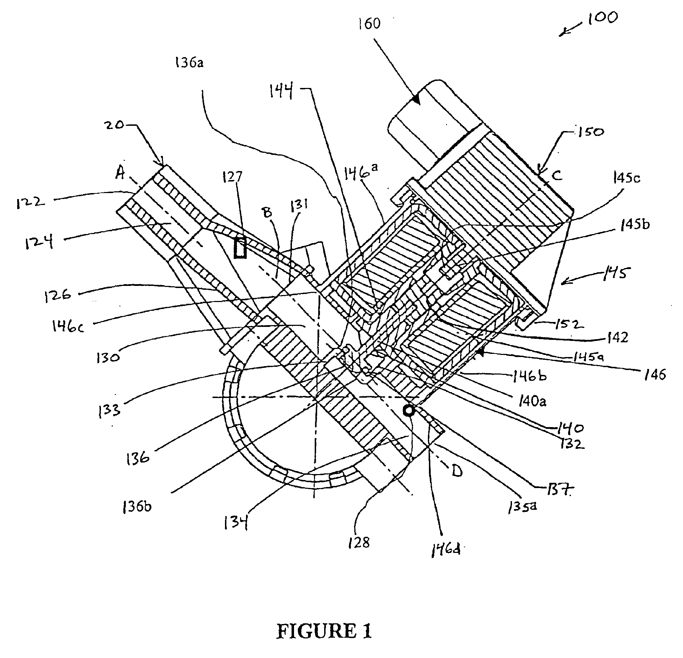

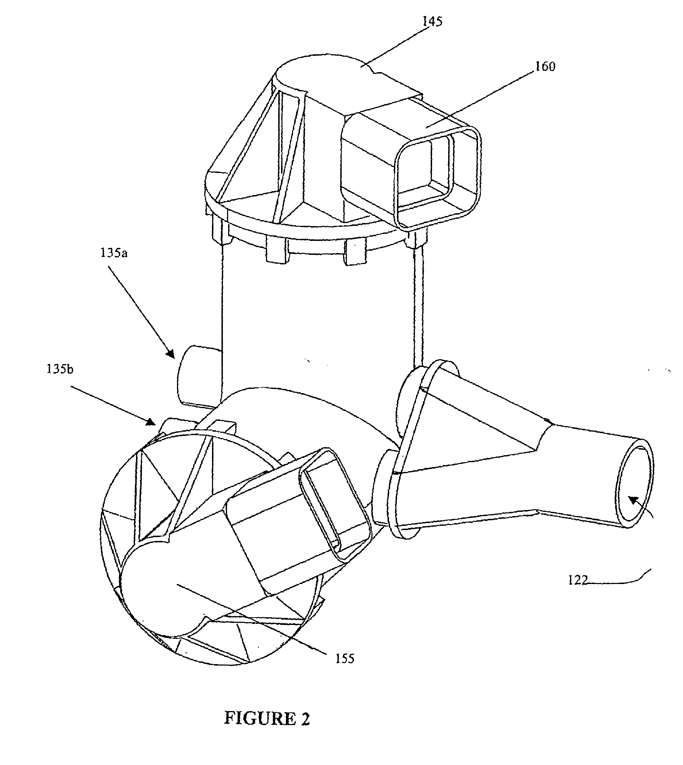

Figures 1 and 2 illustrate an air mass flow controller valve 100 according to a preferred embodiment. The air mass flow controller valve 110 can deliver air to a reformer of a fuel cell (not shown) on board a vehicle or anywhere else that is necessary, such as, for example, in a fuel cell generating plant. In particular, as shown in Figure 2, the controller valve 110 includes, preferably, single inlet 122 and two outlet channels. The two outlet channels include a first outlet channel 135a and a second outlet channel 135b enclosed in a housing. Each channel is provided with a closure member that regulates air flow between the inlet and the respective outlet channel. The closure member in each actuating device can be actuated by an actuating device. Preferably, a first actuating device 145 regulates the closure member in first outlet channel 135a, and the closure member in the second outlet channel 135b is regulated by a second actuating device 155. Although the first outlet channel 135a and the first actuating device 145 is described in greater detail below, it is to be understood that the description of the first outlet channel 135a, the inlet 122, the actuating device 145 and the housing is also applicable to the second actuating device 155 and the second outlet channel 135b.

Figure 1 shows a side view of the air mass flow controller valve 110. The valve 110 includes an inlet housing 20. The inlet housing 20 has an inlet 122, which is disposed along a first axis A. The cross-section of the inlet can be circular, rectangular or any other polygonal cross-sectional shapes. Preferably, the cross-section of the inlet 122 is circular. The inlet 122 has a first portion 124 and a second portion 126. A cross-sectional area of the first portion 124 can be the same as the cross-sectional area of the inlet 122. A cross-sectional area of the second portion 126 can be greater than the cross-sectional area of the first portion 124. Preferably, the difference in cross-sectional areas of the first portion 124 and the second portion 126 results in a decrease in air pressure flowing to the second portion. The first portion 124 and the second portion 126 may be coupled together by bonding or welding two separate portions. Preferably, the first and second portions are formed as a single piece unit which is then fixedly attached to the housing.

The air mass flow controller valve 110 includes at least a first air channel 135a and a second air channel 135b (Figure 2) that can communicate with at least one inlet 122. The first air channel 135a includes a first inlet channel 130 and a first outlet channel 134. The first inlet channel 130 and the first outlet channel 134 communicate with the inlet 122, and are both disposed along a second axis B. The second air channel 135b includes a second inlet channel (not shown) and second outlet channel (not shown). To maintain brevity, details of the second air channel 135b are not shown. It should be understood, however, that the second inlet channel and the second outlet channel of the second air channel 135b are configured in the same manner as the first air channel 135a as described herein.

At least one pressure sensor is disposed proximate the first inlet channel 130. Preferably, a first pressure sensor 127 is disposed on an inner wall of the second portion 126. The first pressure sensor 127 can be a strain-gauge or piezo-electric type pressure sensor or a resistor type sensor. Preferably, the first pressure sensor 127 is a piezo-electric type pressure sensor.

The first inlet channel 130 includes a first inlet portion 131 disposed along the first axis A and a first outlet portion 132 disposed along an axis transverse to the first axis A. The first outlet channel 134 includes a first inlet portion 133 disposed proximate the first outlet portion 132 along an axis transverse to the first axis A. The first outlet channel 134 constitutes part of the first channel 135a disposed along the fourth axis D.

A seat portion 136 connects the first inlet portion 133 and the first outlet portion 132 to present a generally flat seating surface 136a on which a sealing member 137, preferably an O-ring, is disposed thereon. The seat portion 136 includes an opening extending through the seat portion 136 along the third axis C. The depth of the opening can be defined as a distance between the first axis A and the fourth axis D. A first closure member 140 is disposed, in one position proximate the first inlet channel 130, the first outlet channel 134, and the O-ring 137 of the seat portion 136. The first closure member 140 is movable to a plurality of positions along the third axis C, including a first position and a second position. When the closure member 140 is in the first position, air can flow between the first inlet channel 130 and the first outlet channel 134, whereas in the second position, the closure member 140 prevents communication between the first inlet channel 130 and the first outlet channel 134. The closure member 140 has a stem 140a that is disposed along the third axis C and a seating member 136b that is disposed along the first axis A and the second axis B. The stem and the seating member of the closure member 140 can be formed as a two-piece assembly. Preferably, the stem 140a is integrally formed with the seating member 136b. The seating surface 136a is disposed in a confronting arrangement with the seating member 136b of the first closure member 140. Again, the seating surface 136a of the seat portion 136 may also include at least one sealing member 137, such as an O-ring, disposed between the seating surface of the seat portion 136 and the seating member 136b of the first closure member 140.

In order to move the closure member 140 to different positions along the third axis C, at least one actuating device can be provided to actuate each closure member. Preferably, two actuating devices 145 and 155 (Figure 2) are provided. The actuating devices 145 and 155 can include pneumatic actuators or electrical actuators. Preferably, the actuating device 145 is an electromagnetic actuator that includes an armature assembly 142 coupled to the first closure member 140, and disposed along the third axis C. The armature 142 is displaceable along the third axis C when electromotive forces are introduced into electromagnetic coil 145a. The electromotive force introduced to the coil 145a is believed to induce the generation of electromagnetic flux in the electromagnetic coil 145a that flows to the armature 142. The flow of magnetic flux to the armature 142 tends to move the armature 142 towards a pole piece 145b so as to complete a magnetic circuit from the coil 145a to the armature 142, the pole piece 145b and back to the coil 145a. Upon deactivation of the device 145, a sliding bearing 144 can be provided to act as a stopper for the armature 142. A position sensor 145c is preferably positioned on an end of the pole piece 145b. Data from the first pressure sensor 127 and the position sensor 145c can be used to determine an air mass amount.

When the device 145 is actuated, the magnitude of displacement of the armature assembly 142 is generally equivalent to the amount of air permitted to flow between the first inlet channel 130 and the first outlet channel 134. The actuating device 145 is responsive to the first pressure sensor 127 and the position sensor 145c to regulate the amount of air flow between the inlet 122 and the first channel 135a as a function of a target air mass amount or a target air mass flow rate. Preferably, the actuating device 145 can be controlled by electrically connecting the coil 145a to a controller (not shown) that outputs a pulse width modulated signal. Here, the pulse width modulated signal represents the target air mass amount or the target air mass flow rate as determined by the controller (not shown). The pulsewidth-modulated signal can be feedback controlled by a "processed signal" from the first pressure sensor 127 and the position sensor 145c to the controller (not shown). As used here, the term "processed signal" indicates that the signal from the first pressure sensor 127 and the position sensor 145c can be processed by an analog to digital converter, and then subsequently treated so that this processed signal can be used to determine the feedback error signal to control the actuating device 145.

Although a pressure sensor and a position sensor can be used to determine the airmass flow rate in one preferred embodiment, it is contemplated that, in another preferred embodiment, the pressure sensor and the position sensor can be replaced with a single airmass sensor 128 disposed in each outlet channel of outlet channels 134 and 135. A signal from the airmass sensor 128 can be processed and treated such that this signal can be used to determine the feedback error signal needed to control the actuating device 145 as described above. The airmass sensor can be, for example, a hot-wire type or a resistive type airmass sensor. Preferably, the airmass sensor is a hot-wire type.

The actuating device 145 is disposed in an actuator housing 146 that includes a first wall 146a and a second wall 146b disposed along the third axis C, a third wall 146c disposed along the second axis B, and a fourth wall 146d disposed along the fourth axis D. The first wall 146a and the third wall 146c are formed as part of the first inlet portion 131. The second wall 146b and the fourth wall 146d are formed as part of the second outlet portion 135. The actuator housing 146 further includes a sensor cap 150, which is configured to couple with the first wall 146a and the second wall 146b in a locking arrangement. The locking arrangement may be achieved by a plurality of locking clips 152 extending from a base of the sensor cap 150. The cap 150 also includes an electrical connector 160 that can be used to couple the controller (not shown) to the first pressure sensor 127 and the position sensor 145c in each channel and the controller (not shown) to the actuating device 145.

The operation of one of the actuating devices 145, 155 in the air mass flow controller valve 100 will now be described. Specifically, in the actuating device 145, the armature 142 acts in response to signals provided by a controller or by the first pressure sensor 127 and the position sensor 145c (or a single airmass sensor 128) to regulate the flow of air by displacing the first closure member 140 between the first position and the second position. In the first position, the first closure member 140 is unseated. Thus, air that flows into the inlet 122 flows through the first inlet channel 130 past the first closure member 140 and through the first outlet channel 134 exiting the air mass flow controller valve 100 through the second outlet portion 135. In the second position, the first closure member 140 is seated against the seat portion 136 and the sealing member 137. Thus, air that flows into the inlet 122 flows into the first inlet channel 130, but is prevented from flowing through the first outlet channel 134 by the seating of the first closure member 140. Likewise, the air flow through the second channel 135b can also be regulated by the other actuating device 155 and its associated closure member, pressure and position sensors (or a single airmass sensor).

While the present invention has been disclosed with reference to certain embodiments, numerous modifications, alterations and changes to the described embodiments are possible without departing from the scope of the present invention, as defined in the appended claims. Accordingly, it is intended that the present invention not be limited to the described embodiments, but that it has the full scope defined by the language of the following claims, and equivalents thereof.

## Claims

1. An air mass flow controller valve (100) comprising:
an air inlet (20, 122, 124, 126);
at least two channels (e.g. 130, 134) coupled to respective air outlets (135a, 135b);
respective closure members (e.g. 140) in each of said channels; each said closure member being movable relative to a respective seating means (e.g. 136, 136a, 136b) for selectively permitting or preventing a flow of air from said inlet to said outlets;
respective actuating means (145, 155) for moving each said closure member (e.g. 140) between first and second positions relative to said seating means (e.g. 136, 136a, 136b) whereby said flow of air is respectively permitted and prevented;
the controller valve (100) being **characterized by**:
said channels (e.g. 130, 134) and said closure members (e.g. 140), said seating means (e.g. 136, 136a, 136b) and said actuating means (145, 155) being relatively disposed and configured such that said air flow from said inlet (20, 122, 124, 126); to each of said outlets (135a, 135b) is substantially transverse to the movement of said closure members (e.g. 140);
respective sensor means (e.g. 127, 145c; or 146d) associated with each of said channels (e.g. 130, 134) being provided and operable to sense an air mass flowing in each of said channels and to develop respective electrical signals indicative thereof;
control means for utilizing said electrical signals and target air mass signals for the channels to generate respective feedback error signals and for utilizing said feedback error signals to control the movements of said closure members (e.g. 140) thereby regulating the air flows in each of said channels.

2. A valve according to claim 1, wherein the air inlet comprises a first portion (124) having a first cross sectional area and a second portion (126) having a second cross sectional area greater than said first cross-sectional area.

3. A valve according to claim 1 or claim 2, wherein each said sensor means comprises a respective pressure sensor (e.g. 127) and a position sensor (e.g. 145c) adapted to sense the position of the actuating means (145, 155).

4. A valve according to any preceding claim, wherein the seating means comprises a seating surface (e.g. 136a) in a confronting arrangement with the closure member (e.g. 140), the seating surface having at least one sealing member (137) disposed between the seating surface and the closure member.

5. A valve according to any preceding claim, wherein each of said actuator means (145, 155) comprises a sliding bearing (144) configured to permit the closure member (e.g. 140) to reciprocate between the first position and the second position.

6. A valve according to any preceding claim, wherein said control means comprises a controller configured to output respective pulse-width modulated signals for each of said actuator means (145, 155); said pulse-width modulated signals representing said target air mass.

7. A method of distributing metered airflow from an inlet (20, 122, 124, 126) to a plurality of channels (130,134,135a), each channel of the plurality of channels provided with an air mass flow sensor (e.g. 127, 145c; or 146d) that provides a signal indicating measured air amount flowing in each channel of the plurality of channels, a plurality of closure members (e.g. 140), each closure member being proximate to a seat portion (e.g. 136) and disposed in a respective channel of the plurality of channels, each closure member being movable by an actuator (145, 155) between a first position to permit flow and a second position to prevent flow, the method comprising:
flowing air to the inlet;
determining an air mass amount in each channel of the plurality of channels; and
distributing the air mass amount provided to each channel from the inlet as a function of a desired air amount and the air mass amount determined in each channel.

8. The method of claim 7, wherein the flowing air further comprises flowing air in a passage with a first portion (124) and a second portion (126), the first portion having a first cross section area and the second portion having a second cross sectional area, greater than the first cross sectional area.

9. The method of claim 7 or claim 8, wherein the determining of the air mass amount further comprises sensing a voltage of a transducer disposed in each channel of the plurality of channels.

10. The method of any of claims 7 to 9, wherein the distributing further comprises modulating the closure member (e.g. 140) between the first position and the second position.

11. The method of claim 10, wherein the distributing further comprises reciprocating the closure member (e.g. 140) in response to pulse-width modulated signals.

12. The method of claim 10 or claim 11, wherein the modulating further comprises feedback controlling the closure member (e.g. 140) between the first position and the second position based on a difference between the desired air mass amount and determined air mass amount.

## Patentansprüche

1. Luftmassenstrom-Steuerventil (100), welches umfasst:
einen Lufteinlass (20, 122, 124, 126);
mindestens zwei Kanäle (z. B. 130, 134), die mit jeweiligen Luftauslässen (135a, 135b) gekoppelt sind;
jeweilige Verschlusselemente (z. B. 140) in jedem der besagten Kanäle, wobei jedes besagte Verschlusselement relativ zu einem jeweiligen Aufnahmemittel (z. B. 136, 136a, 136b) beweglich ist, um selektiv einen Luftstrom von dem besagten Einlass zu den besagten Auslässen zu ermöglichen oder zu verhindern;
jeweilige Betätigungsmittel (145, 155) zum Bewegen des jeweiligen besagten Verschlusselementes (z. B. 140) zwischen einer ersten und einer zweiten Position relativ zu dem besagten Aufnahmemittel (z. B. 136, 136a, 136b), wodurch der besagte Luftstrom ermöglicht bzw. verhindert wird;
wobei das Steuerventil (100) **dadurch gekennzeichnet ist, dass**:
die besagten Kanäle (z. B. 130, 134) und die besagten Verschlusselemente (z. B. 140), die besagten Aufnahmemittel (z. B. 136, 136a, 136b) und die besagten Betätigungsmittel (145, 155) so relativ zueinander angeordnet und gestaltet sind, dass der besagte Luftstrom von dem besagten Einlass (20, 122, 124, 126) zu jedem der besagten Auslässe (135a, 135b) im Wesentlichen quer zur Bewegung der besagten Verschlusselemente (z. B. 140) verläuft;
jeweilige Sensormittel (z. B. 127, 145c; oder 146d), die mit jedem der besagten Kanäle (z. B. 130, 134) verknüpft sind, vorgesehen sind und bewirken, dass eine in jedem der besagten Kanäle strömende Luftmasse erfasst wird und dass jeweilige elektrische Signale erzeugt werden, die diese anzeigen;
Steuermittel zur Auswertung der besagten elektrischen Signale und von Ziel-Luftmassensignalen für die Kanäle zur Erzeugung jeweiliger Rückführ-Fehlersignale sowie zur Verwendung der besagten Rückführ-Fehlersignale, um die Bewegungen der besagten Verschlusselemente (z. B. 140) zu steuern und **dadurch** die Luftströme in jedem der besagten Kanäle zu regeln, vorgesehen sind.

2. Ventil nach Anspruch 1, wobei der Lufteinlass einen ersten Teil (124) mit einer ersten Querschnittsfläche und einen zweiten Teil (126) mit einer zweiten Querschnittsfläche, die größer als die erste Querschnittsfläche ist, umfasst.

3. Ventil nach Anspruch 1 oder Anspruch 2, wobei jedes besagte Sensormittel einen jeweiligen Drucksensor (z. B. 127) und einen Positionssensor (z. B. 145c), der in der Lage ist, die Position des Betätigungsmittels (145, 155) zu erfassen, umfasst.

4. Ventil nach einem der vorhergehenden Ansprüche, wobei das Aufnahmemittel eine Aufnahmefläche (z. B. 136a) umfasst, die so angeordnet ist, dass sie sich gegenüber dem Verschlusselement (z. B. 140) befindet, wobei die Aufnahmefläche wenigstens ein Dichtelement (137) aufweist, das zwischen der Aufnahmefläche und dem Verschlusselement angeordnet ist.

5. Ventil nach einem der vorhergehenden Ansprüche, wobei jedes der besagten Betätigungsmittel (145, 155) ein Gleitlager (144) umfasst, das so gestaltet ist, dass es dem Verschlusselement (z. B. 140) ermöglicht, eine hin- und hergehende Bewegung zwischen der ersten Position und der zweiten Position auszuführen.

6. Ventil nach einem der vorhergehenden Ansprüche, wobei das besagte Steuermittel ein Steuergerät umfasst, das so beschaffen ist, dass es für jedes der besagten Betätigungsmittel (145, 155) jeweilige pulsbreitenmodulierte Signale ausgibt, wobei die besagten pulsbreitenmodulierten Signale die besagte Ziel-Luftmasse repräsentieren.

7. Verfahren zum Verteilen eines dosierten Luftstromes von einem Einlass (20, 122, 124, 126) zu einer Vielzahl von Kanälen (130, 134, 135a), wobei jeder Kanal aus der Vielzahl von Kanälen mit einem Luftmassenstrom-Sensor (z. B. 127, 145c; oder 146d) ausgestattet ist, welcher ein Signal liefert, das die gemessene Luftmenge anzeigt, die in jedem Kanal aus der Vielzahl von Kanälen strömt, und mit einer Vielzahl von Verschlusselementen (z. B. 140), wobei jedes Verschlusselement sich in der Nähe eines Sitzteils (z. B. 136) befindet und in einem jeweiligen Kanal aus der Vielzahl von Kanälen angeordnet ist und jedes Verschlusselement von einem Betätigungselement (145, 155) zwischen einer ersten Position, um einen Durchfluss zu ermöglichen, und einer zweiten Position, um einen Durchfluss zu verhindern, bewegt werden kann, wobei das Verfahren beinhaltet:
das Strömen von Luft zum Einlass;
das Bestimmen einer Luftmassenmenge in jedem Kanal aus der Vielzahl von Kanälen; und
das Verteilen der zur Verfügung gestellten Luftmassenmenge auf die einzelnen Kanäle vom Einlass aus in Abhängigkeit von einer gewünschten Luftmenge und der in den einzelnen Kanälen bestimmten Luftmassenmenge.

8. Verfahren nach Anspruch 7, wobei das Strömen von Luft ferner das Strömen von Luft in einem Durchlass mit einem ersten Teil (124) und einem zweiten Teil (126) umfasst, wobei der erste Teil eine erste Querschnittsfläche und der zweite Teil eine zweite Querschnittsfläche, die größer als die erste Querschnittsfläche ist, aufweist.

9. Verfahren nach Anspruch 7 oder Anspruch 8, wobei das Bestimmen der Luftmassenmenge ferner das Erfassen einer Spannung eines Messwandlers umfasst, der in jedem Kanal aus der Vielzahl von Kanälen angeordnet ist.

10. Verfahren nach einem der Ansprüche 7 bis 9, wobei das Verteilen ferner das Modulieren des Verschlusselements (z. B. 140) zwischen der ersten Position und der zweiten Position umfasst.

11. Verfahren nach Anspruch 10, wobei das Verteilen ferner eine hin- und hergehende Bewegung des Verschlusselements (z. B. 140) in Reaktion auf pulsbreitenmodulierte Signale umfasst.

12. Verfahren nach Anspruch 10 oder Anspruch 11, wobei das Modulieren ferner ein Rückführfehlersignal zum Steuern der Bewegung des Verschlusselements (z. B. 140) zwischen der ersten Position und der zweiten Position auf der Basis einer Differenz zwischen der gewünschten Luftmassenmenge und der bestimmten Luftmassenmenge umfasst.

## Revendications

1. Soupape de régulation de débit massique d'air (100) comprenant :
une entrée d'air (20, 122, 124, 126) ;
au moins deux conduits (par exemple, 130, 134) couplés à des sorties d'air respectives (135a, 135b) ;
des organes d'obturation respectifs (par exemple, 140) dans chacun desdits conduits, chacun desdits organes d'obturation étant déplaçable relativement à un moyen d'appui respectif (par exemple, 136, 136a, 136b) pour permettre ou empêcher sélectivement un écoulement d'air de ladite entrée auxdites sorties ;
des moyens d'actionnement respectifs (145, 155) pour déplacer chacun desdits organes d'obturation (par exemple, 140) entre une première et une seconde position relativement auxdits moyens d'appui (par exemple, 136, 136a, 136b), ce par quoi ledit écoulement d'air est respectivement permis et empêché ;
la soupape de régulation (100) étant **caractérisée en ce que** :
lesdits conduits (par exemple, 130, 134) et lesdits organes d'obturation (par exemple, 140), lesdits moyens d'appui (par exemple, 136, 136a, 136b) et lesdits moyens d'actionnement (145, 155) sont disposés et configurés relativement de telle sorte que ledit écoulement d'air de ladite entrée (20, 122, 124, 126) à chacune desdites sorties (135a, 135b) soit sensiblement transversal au mouvement desdits organes d'obturation (par exemple, 140) ;
des moyens formant détecteurs respectifs (par exemple, 127, 145c ; ou 146d) associés à chacun desdits conduits (par exemple, 130, 134) sont prévus et utilisables pour détecter une masse d'air s'écoulant dans chacun desdits conduits et pour produire des signaux électriques respectifs indicatifs de celle-ci ;
un moyen de régulation pour utiliser lesdits signaux électriques et des signaux de masse d'air cible pour les conduits afin de produire des signaux d'erreur de rétroaction respectifs et pour utiliser lesdits signaux d'erreur de rétroaction afin de commander les mouvements desdits organes d'obturation (par exemple, 140), régulant par là les débits d'air dans chacun desdits conduits.

2. Soupape selon la revendication 1, dans laquelle l'entrée d'air comprend une première partie (124) ayant une première aire de section droite et une seconde partie (126) ayant une seconde aire de section droite plus grande que ladite première aire de section droite.

3. Soupape selon la revendication 1 ou la revendication 2, dans laquelle chacun desdits moyens formant capteurs est constitué d'un capteur de pression respectif (par exemple, 127) et d'un capteur de position (par exemple, 145c) adapté pour détecter la position des moyens d'actionnement (145, 255).

4. Soupape selon l'une quelconque des revendications précédentes, dans laquelle le moyen d'appui comprend une surface d'appui (par exemple, 136a) dans un agencement en vis-à-vis avec l'organe d'obturation (par exemple, 140), la surface d'appui comportant au moins un organe d'étanchéité (137) disposé entre la surface d'appui et l'organe d'obturation.

5. Soupape selon l'une quelconque des revendications précédentes, dans laquelle chacun desdits moyens formant actionneurs (145, 155) comprend un palier à glissement (144) configuré pour permettre à l'organe d'obturation (par exemple, 140) d'aller et venir entre la première position et la seconde position.

6. Soupape selon l'une quelconque des revendications précédentes, dans laquelle ledit moyen de commande se compose d'une commande configurée pour sortir des signaux respectifs modulés en largeur d'impulsion pour chacun desdits moyens formant actionneurs (145, 155), lesdits signaux modulés en largeur d'impulsion représentant ladite masse d'air cible.

7. Procédé de distribution d'un écoulement d'air dosé à partir d'une entrée (20, 122, 124, 126) à une pluralité de conduits (130, 134, 135a), chaque conduit de la pluralité de conduits étant pourvu d'un capteur de débit massique d'air (par exemple, 127, 145c ; ou 146d) qui fournit un signal indiquant la quantité d'air mesurée s'écoulant dans chaque conduit de la pluralité de conduits, d'une pluralité d'organes d'obturation (par exemple, 140), chaque organe d'obturation étant à proximité d'une partie formant siège (par exemple, 136) et disposé dans un conduit respectif de la pluralité de conduits, chaque organe d'obturation étant déplaçable par un actionneur (145, 155) entre une première position pour permettre l'écoulement et une seconde position pour empêcher l'écoulement, le procédé consistant :
à laisser s'écouler l'air jusqu'à l'entrée ;
à déterminer une quantité massique d'air dans chaque conduit de la pluralité de conduits, et
à distribuer la quantité massique d'air fournie à chaque conduit à partir de l'entrée en fonction d'une quantité d'air voulue et de la quantité massique d'air déterminée dans chaque conduit.

8. Procédé selon la revendication 7, dans lequel le fait de laisser s'écouler l'air consiste par ailleurs à laisser s'écouler l'air dans un passage comportant une première partie (124) et une seconde partie (126), la première partie ayant une première aire de section droite et la seconde partie ayant une seconde aire de section droite, plus grande que la première aire de section droite.

9. Procédé selon la revendication 7 ou la revendication 8, dans lequel la détermination de la quantité massique d'air consiste par ailleurs à détecter une tension d'un transducteur disposé dans chaque conduit de la pluralité de conduits.

10. Procédé selon l'une quelconque des revendication 7 à 9, dans lequel la distribution consiste par ailleurs à moduler l'organe d'obturation (par exemple, 140) entre la première position et la seconde position.

11. Procédé selon la revendication 10, dans lequel la distribution consiste par ailleurs à faire aller et venir l'organe d'obturation (par exemple, 140) en réaction à des signaux modulés en largeur d'impulsion.

12. Procédé selon la revendication 10 ou la revendication 11, dans lequel la modulation consiste par ailleurs à commander par rétroaction l'organe d'obturation (par exemple, 140) entre la première position et la seconde position sur la base d'une différence entre la quantité massique d'air voulue et la quantité massique d'air déterminée.
